# EUROPEAN PATENT APPLICATION

(11) **EP 2 887 251 A1**
(43) Date of publication of application: **24.06.2015**
(21) Application number: 14197803.1
(22) Date of filing: 12.12.2014
(51) Int. Cl.: G06F 21/32, G06F 21/36, G06F 21/44, H04L 29/06, G06F 21/35

(54) **Method of authentication of at least one user with respect to at least one electronic apparatus, and a device therefor**

(30) Priority: 20.12.2013 EP 13306809
(71) Applicant: Orange, 75015 Paris (FR)
(72) Inventor: Nakano, Asako, TOKYO, 160-0022 (JP); Kizawa, Kazuki, TOKYO, 160-0022 (JP); Godefroid, Jeremy Julien, TOKYO, 160-0022 (JP)

(57) **Abstract**

Embodiments of the invention relate to a method of authentication of at least one user, by means of a portable electronic authentication device (20), with respect to at least one electronic apparatus (10). The method comprises the steps of establishing a communication between the authentication device and the electronic apparatus, detecting a movement performed by the user using the authentication device, comparing the detected movement with a stored user profile, and authenticating the user if the detected movement matches a stored user profile.

## Description

### Background of the invention

The present invention relates to a method of authentication of at least one user with respect to at least one electronic apparatus by means of a portable electronic authentication device, as well as a portable electronic authentication device that may be used for such an authentication.

Recent years have seen a growing interest in digital authentication (i.e. security), for example in order to access stored personal data, confidential documents, passwords, contacts, medical information, subscriber or user-appropriate content, secure areas, to complete financial transactions, to perform an electronic signature, and so forth. To this end, numerous methods have been developed to authenticate a user. These methods include traditional passwords and PIN ('Personal Identification Number') codes, with a recent move to biometric data such as fingerprints, voice or facial recognition, retinal scanning, etc.

Nevertheless, passwords, PIN codes, and even biometrical data can be replicated by a third party, depending on available computing power, time, and the authentication parameters implemented in an electronic apparatus to which the third party wishes to gain access.

International publication WO 2013/0116743 discloses an electronic apparatus comprising a touch screen and configured to display an image upon the screen. The user is then required to perform one or more touch actions on the image, such as encircling or swiping an object, as part of a "digital signature scheme" in order to authenticate himself (or herself) with the apparatus. However, there is a risk that the action may be easily observed by a third party or guessed, such as for example drawing a heart around a loved one's photograph or pressing on a certain part of the image.

It may therefore be desired to provide a method and an authentication device that overcome such disadvantages.

### Object and summary of the invention

Embodiments of the invention thus relate to a method of authentication of at least one user, by means of a portable electronic authentication device, with respect to at least one electronic apparatus, the method comprising the steps of establishing a communication between the authentication device and the electronic apparatus; detecting a movement performed by a user using the authentication device; comparing the detected movement with a stored user profile; and authenticating the user if the detected movement matches the stored user profile.

Such a method allows a user to authenticate himself with an electronic apparatus by means of a personal, portable electronic authentication device. The authentication device may be carried by the user, and is relatively easy to operate to perform a motion known only to the user.

According to one embodiment, the movement is a rotation about at least one axis of at least a portion of the authentication device so as to select at least one value of a series of passcode values.

The method thus offers a type of "dial safe" mechanism to be used to enter a passcode, such as a series of numbers known only to the user.

According to one embodiment, the communication is established by means of near field communication, the authentication device being powered by a magnetic field transmitted by the electronic apparatus.

A near field communication offers a short-range contactless solution, without the need for a cabled communication or batteries, offering more autonomy to the device and ease of use.

According to one embodiment, the method further comprises a step of authenticating at least one of:
- a unique device identifier of the authentication device,
- a fingerprint information of the user,
- a location information of the authentication device,
- a position information of the authentication device with respect to the electronic apparatus,
- an external visual code of the authentication device,
- an external peripheral shape of the authentication device, and
- an external three-dimensional pattern of the authentication device.

Such additional authentication parameters measures can be used to increase the authentication level of the device, depending on the electronic apparatus, the number of users, etc. All measures are relatively simple to implement.

According to one embodiment, the method further comprises a preliminary step of configuring the user profile with respect to the authentication device.

The configuration of the user profile may be customized to the level of authentication necessary, the user's personal preferences, the sophistication of the authentication device, and so forth.

Embodiments of the invention also relate to a portable electronic authentication device comprising means for establishing a communication with at least one electronic apparatus, and means for detecting a movement of the authentication device by at least one user such that the detected movement can be compared with a stored user profile such that at least one user may be authenticated with respect to the electronic apparatus.

Such a device allows a user to authenticate himself with an electronic apparatus and is personal and portable. The authentication device may be carried by the user, and is relatively easy to operate to perform a motion known only to the user. Furthermore, the authentication itself may be performed by the device, by the electronic apparatus, or by a third means, such as by internet, a dedicated server, or the "cloud".

According to one embodiment, the means for establishing a communication comprise a near field communication antenna configured to receive energy from a near field communication antenna of the electronic apparatus and to send data by modulation of a signal sent by the antenna of the electronic apparatus.

A near field communication offers a short-range contactless solution, without the need for a cabled communication or batteries, offering more autonomy to the device and ease of use.

According to one embodiment, the device further comprises at least one fingerprint reader arranged on an external surface of the device.

The fingerprint reader offers greater level of authentication, and is arranged for ease of use on the external surface.

According to one embodiment, the authentication device further comprises a memory, and a unique device identifier stored in the memory and used during the authentication process.

A device identifier provides an increased level of authentication.

According to one embodiment, the device comprises at least one of a visual indicator and a series of passcode values, such that a rotation about at least one axis of at least a portion of the device allows at least one of the passcode values to be selected.

The authentication device thus offers a type of "dial safe" mechanism to be used to enter a passcode, such as a series of numbers known only to the user.

According to one embodiment, the device further comprises a base portion and an upper portion, wherein one is fixed and the other is rotatable with respect to the fixed portion.

The device thus facilitates a cabled communication with the electronic apparatus.

According to one embodiment, the device further comprises at least one of:
- a location detection means,
- an external visual code that may be detected by an electronic apparatus,
- an external peripheral shape that may be detected by an electronic apparatus, and
- an external three-dimensional pattern that may be detected by an electronic apparatus.

The above features provide an increased level of authentication, and may be used in combination.

Embodiments of the invention also relate to an electronic apparatus comprising:
- means for establishing a communication with at least one portable electronic authentication device, and
- means for comparing an information of a movement of the authentication device received from the authentication device with a user profile stored such that the user may be authenticated with respect to the electronic apparatus.

According to one embodiment, the user profile is stored in a memory of said electronic apparatus.

According to one embodiment, the electronic apparatus further comprises means for obtaining the user profile from a third party.

The third party maybe the portable electronic authentication device, a secure internet site, a data server located in the "cloud", etc.

Embodiments of the invention also relate to a system comprising a portable electronic authentication device according to one embodiment of the invention and at least one electronic apparatus, the electronic apparatus comprising means for establishing a communication with the authentication device, and means for authenticating at least one user by means of a detected movement performed by the user with the authentication device, by comparison with a stored user profile.

Such a system allows a more secure authentication process of the user with the electronic apparatus, since a specific portable authentication device is used.

Embodiments of the invention also relate to a computer program comprising instructions for the implementation of the method according to one embodiment of the invention when the program is carried out by a processor.

Embodiments of the invention also relate to a medium readable by computer upon which the program according to one embodiment of the invention is stored.

### Brief description of the drawings

Embodiments of the invention will be set forth in the following description in a nonlimiting manner with reference the appended figures in which:
- Figs. 1A, 1B are perspective views of an electronic apparatus and a portable electronic authentication device according to one embodiment of the invention respectively,
- Fig. 2 is a perspective view of the authentication device placed on a surface of the electronic apparatus,
- Fig. 3 is a top view of the authentication device according to one embodiment of the invention,
- Fig. 4 is a top view of the authentication device according to another embodiment of the invention,
- Fig. 5 is a perspective view of an authentication device according to another embodiment of the invention,
- Fig. 6 is a perspective view of a system comprising an electronic apparatus and an authentication device according to another embodiment of the invention,
- Fig. 7 is a flow chart of a method of configuring a user profile using an authentication device according to one embodiment of the invention, and
- Fig. 8 is a flow chart of a method of authenticating at least one user with respect to at least one electronic apparatus by means of an authentication device according to one embodiment of the invention.

### Description of embodiments of the invention

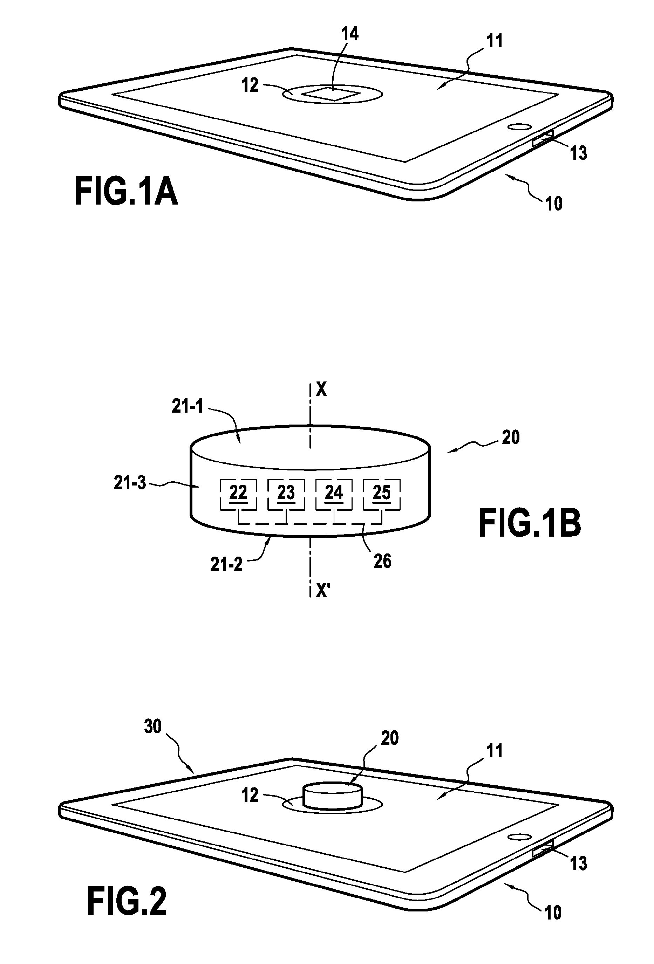

Figs. 1A, 1B are perspective views of an electronic apparatus 10 and a portable electronic authentication device 20, respectively.

In the following, the term "tablet" will be used to designate the electronic apparatus 10 for the sake of simplicity. However, the disclosure is equally applicable to other electronic apparatuses to which a user wishes to authenticate himself, both material elements such as portable devices including mobile telephones, music players, electronic readers, or laptop computers, stationary devices such as a desktop computer or electronic home appliances, areas protected by an electronic access device (lock) including a house, car, or workplace, and even immaterial elements such as internet sites, email accounts, and so forth. Further, the term "knob" will be used to designate the authentication device 20, also for the sake of simplicity. For the moment, it may be considered as a small, portable, lightweight disk.

As shown in Fig. 1A, the tablet 10 comprises a display screen 11, an authentication zone 12 displayed on the screen, an input/output port 13, and a means 14 for establishing a communication with the knob. The tablet also comprises conventional internal electronics, comprising but not limited to a memory, a power supply such as a battery, a data processor, an internet communication means (Wifi, 3G, etc.), a camera, speakers, a microphone, a headphone jack, and the like which will not be further detailed here.

As shown in Fig. 1B, the knob 20 comprises a top planar surface 21-1 to face the user, a bottom planar surface 21-2 to be placed flat on the screen 11 of the tablet 10, and a circular peripheral surface 21-3. The knob is configured to be rotated about an axis X-X' perpendicular to the top and bottom surfaces 21-1, 21-2 when placed on the screen or another flat surface. The knob 20 further comprises, within the body of the knob, a movement detection means 22, a data processor 23, a means 24 for establishing a communication with the tablet, and a memory 25, all coupled to an internal bus 26. These elements are represented schematically through the material of the knob.

In this embodiment, the communication means 14, 24 are conventional near field communication NFC means, such that the tablet operates as an active NFC reader and the knob operates as a passive NFC responder. The connecting means 14, 24 are thus NFC antennas arranged under the surface of the display screen 11 (preferably under the authentication zone 12) and above the bottom surface 21-2 of the knob 20 respectively. The knob thus receives power from the tablet and transmits data by modulation of the transmitted signal, in a known manner.

Fig. 2 is a perspective view of a system 30 comprising the tablet 10 and the knob 20. The knob has been placed flat on the display screen 11 of the tablet, within the authentication zone 12. The NFC antennas of the tablet and knob are thus in communication with each other.

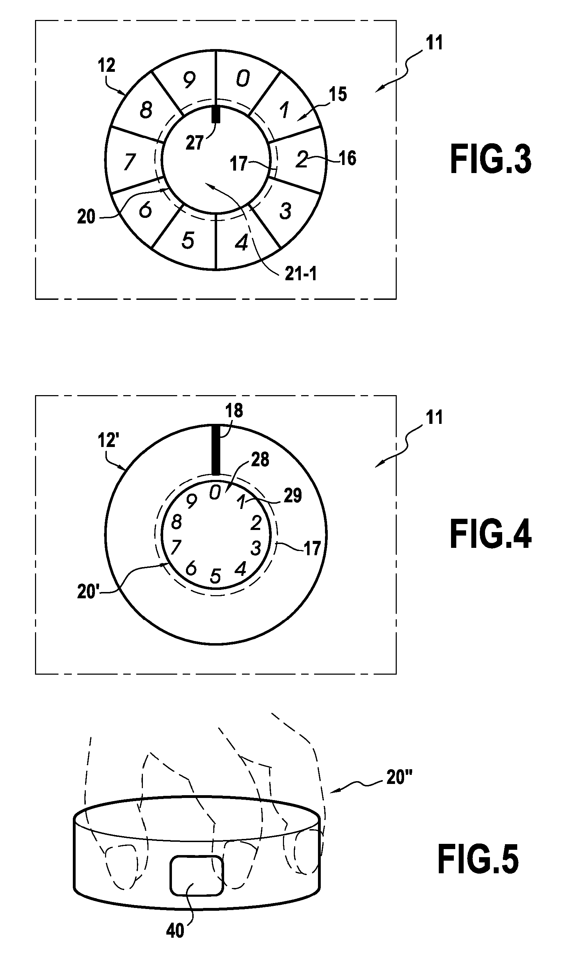

Fig. 3 is a top view of the knob 20 placed in the authentication zone 12 on the surface of the screen 11, according to one embodiment of the invention. The authentication zone 12 comprises a series 15 of individual passcode values 16, here a series of numbers 0 to 9, and may further comprise a central zone 17 to aid the user in proper placement of the knob 20. The knob 20 comprises a visual indicator 27 on its top surface 21-1.

To operate the knob for authentication with respect to the tablet 10, the user must therefore place the knob 20 in the center of the authentication zone 12, and then rotate the knob 20 to select at least one value 16 of the series 15, for example four numbers relating to a PIN code, in a manner similar to that of spinning the dial of a safe. To this end, the movement detection means 22 of the knob detects the rotation of the knob and provides a movement information, which may include clockwise or counter-clockwise rotation, degree and speed of rotation, and even amount of time paused at a position. This information (direction of rotation, speed, and pauses) may also be used in authenticating the user, since different users may rotate in different directions and/or rotate/pause at different rates. For example, the knob is first turned clockwise to select 1, then counter-clockwise to select 9, then clockwise to select 7, and again counter-clockwise to select 9, for a PIN code of 1979. The movement detection means 22 may be a gyro-sensor, an accelerometer, a compass, a potentiometer, and the like, or even a combination of two or more of these means.

Once detected by the movement detection means 22, the movement information may then be processed in at least three manners.

In a first manner, the movement information is transmitted by the communication means 14, 24 to the tablet 10. The tablet then compares the received movement information with a user profile stored in its memory, fetched from a secure internet site, or transmitted from the memory of the knob. If there is a match, the authentication is completed.

In a second manner, the data processor 23 of the knob compares the movement information with a user profile stored in its memory 25, and if there is a match, the knob sends a message to the tablet by means of the communication means 14, 24, signifying that the authentication has been confirmed, such as "Authentication OK". It may be noted that a double verification may be carried out by both the knob and tablet.

In a third manner, the movement information is transmitted by the communication means 14, 24 to the tablet 10. The tablet then connects to a third party, such as an internet site, a data server, or the "cloud", wherein the user profile is stored. The comparison is then performed by the third party, and a message is sent to the tablet signifying that the authentication has been confirmed, such as "Authentication OK".

It should be understood that the same knob may be used by a same user with a plurality of electronic apparatuses, such as a tablet, a mobile phone, and a workplace workstation. To this end, the knob may store information relating to which electronic apparatuses it may operate with, such as by storing electronic apparatus identifiers in its own memory. The authentication may therefore consist of authenticating the knob with respect to the apparatus and of authenticating the apparatus with respect to the knob.

In the case of an NFC communication link, it may be required to first place the antennas in communication with each other with the knob stationary so that the knob may receive power, then perform the rotation, and then again hold the knob stationary, such that a good communication is established between the antennas for transmitting data

Fig. 4 is a top view of a knob 20' placed in an authentication zone 12' on the surface of the screen 11, according to another embodiment of the invention. In this embodiment, the knob 20' comprises a series 28 of passcode values 29, here a series of numbers 0 to 9 on its top surface 21-1, and the authentication zone 12' comprises the central zone 17 and a visual indicator 18. The user again places the knob 20' in the center of the authentication zone 12' and rotates it with respect to the visual indicator 18 to select a passcode.

It will be understood by the skilled person that instead of a series of numbers, the knob and/or authentication zone may comprise letters, colors, pictures, or indeed any other grouping of items that allow a passcode to be selected. The authentication zone may be personalized, modified, enlarged for better viewing, dimmed to reduce the risk of a third party seeing an entered code, and so forth. Further, the determination of whether to arrange the series of passcodes in the authentication zone or on the knob itself (according to the embodiment of Fig. 3 or Fig. 4) will depend in part on the diameter of the knob, the diameter of the authentication zone, the visibility of the markings, and so forth.

Fig. 5 shows a perspective view of a knob 20" according to another embodiment of the invention. In this embodiment, the knob 20" further comprises at least one fingerprint reader 40. The fingerprint reader 40 is preferably arranged on the side of the knob, such that when the knob 20" is grasped for manipulation, the user's finger is easily placed such that a fingerprint may be read.

In particular, though embodiments of the disclosure have been mainly directed to the rotation of the knob 20, 20', 20" with respect to a surface in order to select a passcode, it will be understood by the skilled person that a movement other than rotation of the knob may be carried out instead of or in addition to a rotation. For example, the movement may consist of a swipe of the knob across the surface of the tablet (left to right, right to left, up to down, down to up, diagonally, etc.) or the tracing of a shape (circle, square, diamond, triangle, number, letter, star, etc.).

It will be understood by the skilled person that authentication parameters other than a movement of the device may be implemented.

In one embodiment, the knob 20, 20', 20" comprises a unique device identifier ID that is stored in its memory. This identifier ID may be transmitted to the tablet 10 along with the movement information. The identifier ID may be set in a fixed manner during fabrication, or may be set by the user.

In one embodiment, the external peripheral shape (surface 21-3) of the knob 20, 20', 20" varies from one knob to another. Knobs of different basic shapes (square, oval, star, circle, etc.) can be manufactured, and the tablet may then be programmed to detect the shape of the knob (such as when the knob is placed on the screen 11 or by taking a photograph) and match the shape of the knob with a shape stored in the user profile.

In one embodiment, the knob 20, 20', 20" comprises a three-dimensional pattern, such as a series of dots (similar to that of Braille) or an engraved shape. The pattern is ideally arranged on the bottom surface 21-2 of the knob, such that it comes into contact with a display screen 11, particularly a touch screen, of the tablet 10. The tablet thus detects the three-dimensional pattern and compares it with a stored pattern.

In one embodiment, the tablet 10 displays on the display screen 11 a plurality of possible positions for the knob 20, 20', 20", for example a grid consisting of X's or circles corresponding to the diameter of the knob. The user is thus further required to place the knob on a predefined X or within a predefined circle, for example a top right circle, such that it may be authenticated. Otherwise, if the user does not place the knob in the correct position with respect to the screen, for example in a central circle, the authentication is refused since the position information is incorrect.

In one embodiment, the knob 20, 20', 20" comprises a display configured to display a code, such as a four-digit code that changes every five minutes. The user must then enter the code, either by rotation of the knob as described above in relation with Figs. 3 and 4, by means of a user input module (keyboard, touchscreen) of the tablet, or even by means of small buttons on the knob. The code is then compared with a secure site that is updated along with the code transmitted to the knob.

In one embodiment, the knob further comprises a location detection means, such as indoor location techniques or a GPS ('Global Positioning System') detector. The GPS detector may then send location information to the data processor 23 of the knob and/or of the tablet 10, and the authentication of the user may be refused or a further authentication parameter may be required if the location information does not correspond with the user's typical location information. In other words, the typical location information may be limited to a house and a workplace, or even to a city, and if a user attempts to authenticate from another location, such as another city, a further authentication parameter is performed. In this case, an internal power source (battery) may be required to power the GPS detector.

In one embodiment, the tablet also comprises a location detection means, and the authentication of the user requires that both the tablet and the knob be in a specific location(s). For example, the tablet may be authorized for use in a living room with the knob located in a specific drawer, or within a certain distance, such as 5 meters.

Likewise, once the authentication has been completed, the location detection means may further be used to lock the tablet or require a re-authentication if for example it detects that the ensemble knob/tablet has been moved from the authorized location, or that one has been distanced from the other. As a concrete example, if the user's house is an authorized location for the use of the tablet, and a thief steals the tablet from the house but not knob, the tablet is locked and can no longer be used. Indeed, even if the thief steals the knob as well, the tablet cannot be used because the location detection means has detected that it is no longer in an authorized location.

In one embodiment, the knob 20, 20', 20" further comprises a visual code such as bar code or QR ('Quick Response') code, also known as flash code, on its external surface. The visual code is then also authenticated by the tablet 10, such as by means of a camera or bar code reader.

In one embodiment, biological indicators other than fingerprint readers may be implemented, such as retinal scanning, facial recognition, voice recognition, and the like.

Finally, in one embodiment, acoustic indicators may also be used. The acoustic indicators may for example be a series of beeps (similar to Morse code), spoken words, etc. emitted when the knob 20, 20', 20" is rotated. In this case, the use of headphones plugged into a headphone jack of the tablet 10 would provide an extra authentication parameter since the acoustic indicators would not be heard by others.

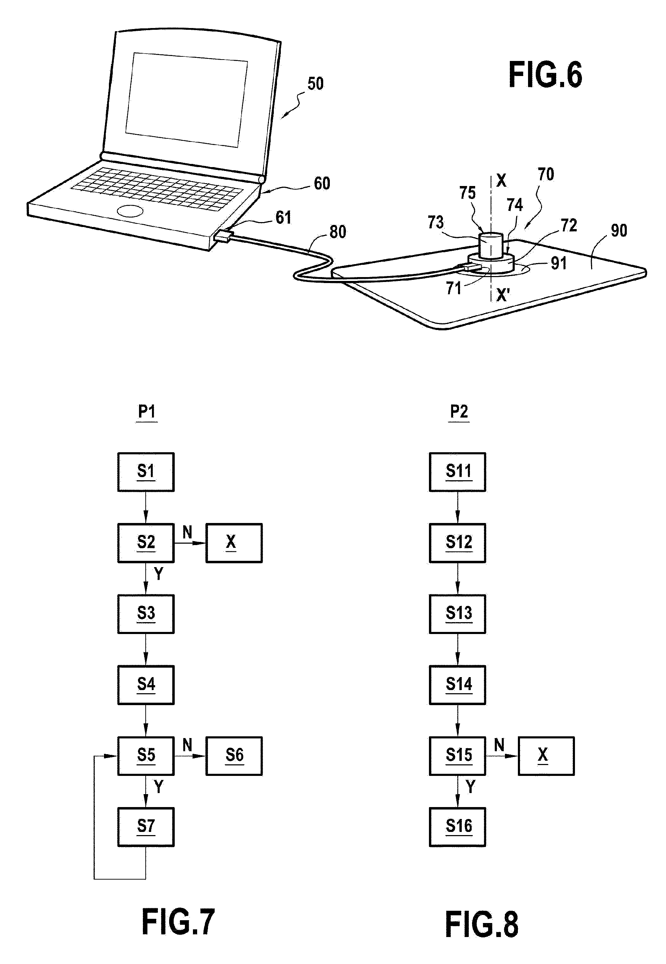

Fig. 6 shows a perspective view of a system 50 according to one embodiment of the invention, comprising an electronic apparatus (laptop computer) 60 and a knob 70. The computer 60 and knob 70 comprise input/output ports 61, 71 respectively, and are connected to each other by means of a wired (cable) communication 80, such as a conventional USB ('Universal Serial Bus') cable. As the rotation of the knob 70 might be hindered by the presence of the cable 80, in this embodiment the knob 70 comprises two parts - a fixed base portion 72 comprising the input/output port 71, and a rotatable upper portion 73.

In this embodiment, the authentication zone may therefore be part of the knob itself, for example displayed on an upper peripheral surface 74 of the base 72, the upper portion 73 comprising a visual indicator on an upper surface 75, or vice versa. The rotation of the upper portion 73 with respect to the base 72 thus allows the passcode to be selected. It may be noted that the base 72 may be rotatable with respect to a fixed upper portion 73, but this is likely to be more inconvenient for the user to manipulate.

Alternatively, the authentication zone is arranged in a permanent manner, for example a conventional mouse pad 90 comprising an authentication zone 91.

It may be noted that the authentication zone is not strictly necessary, as the user may simply rotate the knob with respect to an imaginary point. Nevertheless, having a fixed and defined visual zone aids the user in the manipulation of the knob.

Fig. 7 is a flow chart of a method of configuring P1 a user profile using a knob according to an embodiment of the invention. At a step S1, a communication is established between the knob and the tablet. At a step S2, the tablet recognizes that the knob has never been configured for use therewith, and may display a message such as "Configure new profile?" If the response is no N, the process stops X. If the response is yes Y, at a step S3, the tablet displays the authentication zone, and the user performs a movement with the knob to select a passcode. At a step S4, the movement is detected and the passcode corresponding to the movement is saved in the memory of the knob, the tablet, or both.

At a step S5, the tablet displays a message such as "Set further authentication?" If the response is no N, at a step S6 the user profile is saved and the user may then set a name for the profile, an authentication-level, as well as other options, such as whether the profile is specific to that device or may be used with any device.

Otherwise, if the response is yes Y, at a step S7 a further authentication parameter is set, such as registering a fingerprint, a visual code, a unique device identifier ID, and so forth, depending on the configuration of the knob and the required authentication level. The configuration process then returns to step S5, and continues until no other authentication parameters are to be set.

It will be understood by the skilled person that other configuration methods can be implemented, for example manually entering a passcode by means of a keyboard of the tablet, automatic recognition of the knob and a factory-set passcode, a downloaded configuration program, etc.

Fig. 8 is a flow chart of a method P2 of authenticating the user with respect to the tablet, by means of the knob.

At a step S11, a communication is established between the knob and the tablet. At a step S12, the tablet displays the authentication zone, and the user performs a movement with the knob to select a passcode. At a step S13, the movement is detected by the movement detection means 22. At a step S14, the passcode corresponding to the movement is compared with a stored user profile (in the memory of the knob or tablet). At a step S15, the data processor (of the knob or the tablet) determines whether there is a match. If the response is no N, the authentication process stops X. If the response is yes Y, at a step S16 the user is authenticated for use of the tablet.

It may be noted that it is not essential that a communication be established between the tablet and the knob before the user performs the movement of the knob. The performed movement may be stored in the memory 25 of the knob and then transmitted at a later time. In this case, it may be desired to set a maximum time limit between the time that the movement is performed and the communication established for authentication, so as to reduce the risk of fraudulent use.

A plurality of user profiles for a single user may be stored, depending for example on the required level of authentication, the apparatus to be accessed, different applications of a single apparatus, and so forth. For example, a low-level authentication may consist of only the movement of the knob, whereas a medium-level authentication may consist of the movement and a position information, and a high-level authentication may consist of the movement, the position information, and a fingerprint reading.

Likewise, a same movement may be associated with several user profiles, such as access by family members to their house. Nevertheless, in this case, an additional authentication may be desired, such as the transmission of the unique identifiers ID associated with each family member's device.

Likewise, several users, such as those belonging to a single family, may use a same knob to access a same apparatus such as the family computer. In this case, a further authentication parameter may be implemented, so that different family members have access to different user-appropriate features, email accounts, and the like. The family members may distinguish themselves by having different passcodes or by fingerprint recognition for example. Additionally, several users may use a same knob to access different apparatuses, such as individual mobile phones.

In one embodiment, the authentication of the user with respect to one apparatus may then be transmitted to the user's other apparatuses in the vicinity. For example, when the user wakes up in the morning, he can use the knob placed at the bedside to authenticate himself with respect to a mobile phone. The mobile phone can then transmit the authentication to a nearby tablet, laptop computer, and even electronic appliances such as to start a coffee maker.

The knob may have other forms, such as a chess pawn, a small puck, a flat circular base with a handle projecting perpendicularly thereto, etc. Ideally, the knob is relatively lightweight, and an appropriate size for a user to grasp and manipulate, that is to say, not so large so as to be cumbersome and strain the hand, and not so small so as to be easily misplaced or hard to grasp. The knob may have dimensions of 1.5 to 5 cm height, 2.5 to 7 cm of diameter, and a weight of 100 to 250 g. Nevertheless, these values are given for purposes of illustration only, and are not intended to be limiting.

The external shape of the knob may comprise indentations destined to receive fingertips such that the knob is grasped in a predefined manner. In particular, fingerprint readers 40 may be placed within the indentations, such that when the knob is grasped, the fingers are automatically in contact with the fingerprint readers.

Though embodiments of the invention have been described in relation with an NFC or cable communication, other communication types may be envisaged such as Bluetooth, 3G, WiFi, cellular, and so forth. Furthermore, though the energy to power the knob has been described as either being sent by the cable or by NFC, the knob may instead comprise a conventional battery, a rechargeable battery, or even be powered by other means, such as solar.

In the case of a non-contact non-cabled communication such as Bluetooth, a maximum authentication distance between the knob and the tablet may be defined, in order to increase the authentication level. In the case of a WiFi communication, either directly to each other or to a same WiFi access point, the tablet may be set in a wait mode and then receive the data from the knob after the movement has been performed. The knob may transmit the movement information via internet to the tablet.

A defined authentication zone may be set, such as a zone of a predetermined size and/or located at a predetermined distance from the tablet, for example between 50 and 100 cm from the tablet. In one embodiment, the authentication zone may be the size of a conventional mouse pad, intended to be placed at a typical distance from a laptop computer.

Though the rotation of the knob has been primarily described as rotation about a single axis (X-X'), it will be understood that rotation about two or more axes may be envisaged. Furthermore, though the rotation has been described as with respect to the "authentication zone", the rotation could comprise a simple action such as completely rotating the knob a certain number of times, such as three times. In this case, it may be desired to provide a further authentication measure.

Finally, though the authentication has been described primarily in allowing access to an electronic apparatus, it may be interpreted instead or additionally as locking an apparatus, for example both opening and locking a door, a user account, etc. It may also be taken to mean authorizing delete/modification privileges of files, and in general any action that a user may wish to perform with respect to an apparatus. To this end, the term "authenticate" should be interpreted in a general manner, and can also be taken to mean "validate", "authorize", or "verify".

Embodiments of the invention also relate to a computer program comprising instructions for the implementation of the authentication method according to the invention, in particular that disclosed in relation with Fig. 8.

Such a computer program may be supplied on a medium readable by computer upon which the program is stored, particularly in a non-transitory manner. The program may be supplied with the authentication device to aid the user in configuring and using the device.

## Claims

1. A method (P2) of authentication of at least one user, by means of a portable electronic authentication device (20, 20', 20", 70), with respect to at least one electronic apparatus (10, 60),
the method comprising the steps of:
- establishing (S11) a communication between the authentication device and the electronic apparatus,
- detecting (S13) a movement performed (S12) by the user using the authentication device,
- comparing (S14) the detected movement with a stored user profile, and
- authenticating (S15, S16) the user if the detected movement matches the stored user profile.

2. The method according to claim 1,
wherein the movement (S12) is a rotation about at least one axis (X-X') of at least a portion (20, 20', 20", 72, 73) of the authentication device so as to select at least one value (16, 29) of a series (15, 28) of passcode values.

3. The method according to one of claims 1 or 2,
wherein the communication (S11) is established by means of near field communication (14, 24), the authentication device being powered by a magnetic field transmitted by the electronic apparatus (10).

4. The method according to one of claims 1 to 3,
further comprising a step of authenticating at least one of:
- a unique device identifier (ID) of the authentication device,
- a fingerprint information of the user,
- a location information of the authentication device,
- a position information of the authentication device with respect to the electronic apparatus,
- an external visual code of the authentication device,
- an external peripheral shape (21-3) of the authentication device, and
- an external three-dimensional pattern of the authentication device.

5. The method according to one of claims 1 to 4,
further comprising a preliminary step (P1) of configuring the user profile with respect to the authentication device.

6. A portable electronic authentication device (20, 20', 20", 70) comprising:
- means for establishing (24, 71) a communication with at least one electronic apparatus (10, 60), and
- means for detecting (22) a movement of the authentication device by at least one user such that the detected movement can be compared with a stored user profile such that the user may be authenticated with respect to the electronic apparatus.

7. The device according to claim 6,
wherein the means for establishing a communication comprise a near field communication antenna (24) configured to receive energy from a near field communication antenna (14) of the electronic apparatus, and to send data by modulation of a signal sent by the antenna of the electronic apparatus.

8. The device according to one of claims 6 or 7,
further comprising at least one fingerprint reader (40) arranged on an external surface (21-3) of the device.

9. The device according to one of claims 6 to 8,
wherein the authentication device further comprises:
- a memory (25), and
- a unique device identifier (ID) stored in the memory and used during the authentication process.

10. The device according to one of claims 6 to 9,
wherein the device comprises at least one of:
- a visual indicator (27), and
- a series of passcode values (28, 29),
such that a rotation about at least one axis (X-X') of at least a portion of the device allows at least one of the passcode values to be selected.

11. The device according to one of claims 6 to 10,
wherein the device further comprises:
- a base portion (72), and
- an upper portion (73),
wherein one is fixed and the other is rotatable with respect to the fixed portion.

12. The device according to one of claims 6 to 11,
wherein the device further comprises at least one of:
- a location detection means,
- an external visual code that may be detected by an electronic apparatus,
- an external peripheral shape (21-3) that may be detected by an electronic apparatus, and
- an external three-dimensional pattern that may be detected by an electronic apparatus.

13. An electronic apparatus (10, 60) comprising:
- means for establishing (14, 24, 71) a communication with at least one portable electronic authentication device (20, 20', 20", 70), and
- means for comparing an information of a movement of the authentication device (20, 20', 20", 70) received from the authentication device (20, 20', 20", 70) with a user profile stored such that the user may be authenticated with respect to the electronic apparatus.

14. The electronic apparatus according to claim 13,
wherein the user profile is stored in a memory of said electronic apparatus.

15. The electronic apparatus according to claim 13,
wherein the electronic apparatus further comprises :
- means for obtaining the user profile from a third party.

16. A system (30, 50) comprising a portable electronic authentication device (20, 20', 20", 70) according to one of claims 6 to 12 and at least one electronic apparatus (10, 60), the electronic apparatus comprising:
- means for establishing (14, 61) a communication with the authentication device, and
- means for authenticating at least one user by means of a detected movement performed by the user with the authentication device, by comparison with a stored user profile.

17. A computer program comprising instructions for the implementation of the method according to one claims 1 to 5 when the program is carried out by a processor.

18. A medium readable by computer upon which the program according to claim 14 is stored.
